# FASCICULE DE BREVET EUROPEEN

(11) **EP 0 849 235 B1**
(45) Date de publication et mention de la délivrance du brevet: **19.04.2000**
(21) Numéro de dépôt: 96440113.7
(22) Date de dépôt: 20.12.1996
(51) Int. Cl.: C03C 17/04

(54) **Procédé pour la réalisation d'un volume en verre destiné à contenir un liquide**
Verfahren zur Herstellung eines Glasgegenstandes zur Aufnahme einer Flüssigkeit
Method for producing a glass article for containing a liquid

(43) Date de publication de la demande: 24.06.1998
(73) Titulaire: Saga Decor, 60700 Pont-Sainte-Maxence (FR); JH Holding, 67290 Petersbach (FR)
(72) Inventeur: Roquette, Michel, 75017 Paris (FR)
(74) Mandataire: Littolff, Denis

(56) Documents cités:
- EP-A- 0 573 379
- WO-A-95/25009
- FR-A- 2 229 659
- US-A- 4 343 641
- DATABASE WPI Section Ch, Week 8915 Derwent Publications Ltd., London, GB; Class L01, AN 89-112695 XP002031024 & SU 1 428 725 A (YARMOLINSKAYA L N) , 7 Octobre 1988

## Description

La présente invention concerne le domaine des bouteilles, flacons et volumes analogues en verre, destinés d'une manière générale à contenir du vin ou des produits alcoolisés analogues et dont la surface extérieure a subi un traitement destiné à créer un effet décoratif ou tout au moins original, contribuant à l'identification de l'origine de tels volumes, ou contribuant à leur attrait auprès de la clientèle.

Il existe déjà une très grande variété de tels volumes décorés, obtenus par des traitements très divers.

Dans tout ce qui suit, on se référera à des bouteilles, qui représentent les volumes les plus courants subissant de tels traitements.

Une première catégorie de traitements fait intervenir un enlèvement superficiel de matière, c'est à dire de verre.

Un exemple d'un tel traitement est la projection sur la surface extérieure de la bouteille de grains très fins de matériau abrasif, par exemple du corindon : on obtient alors un effet de grainage en creux, mais considéré comme visuellement insatisfaisant. Un autre exemple est l'abrasion de la surface au moyen d'un réactif acide et/ou corrosif. On n'obtient alors qu'un satinage par opacification de la paroi du flacon, et cela au prix d'une pollution de l'environnement et de conditions de travail dangereuses pour les opérateurs.

Une seconde catégorie de traitement fait intervenir un dépôt d'agents étrangers sur la surface extérieure de la bouteille.

Un exemple d'un tel traitement par un matériau rapporté sur la surface de la bouteille est le dépôt électrostatique de fines particules qui doivent ensuite être «fixées» au moyen d'un enduit convenable. Un autre exemple est le dépôt de particules sur ladite surface, laquelle a été préalablement revêtue d'un tel enduit remplissant la fonction d'adhésif pour ces particules.

Dans les deux cas, le revêtement ne résiste pas aux frottements mécaniques, ni à la chaleur, qui éliminent l'enduit fixateur, les particules n'ayant en elles-mêmes aucune tendance à adhérer au verre.

Un autre traitement encore par apport de particules étrangères sur la surface de la bouteille consiste à appliquer à cette surface des émaux se présentant sous forme de particules colorées en mélange avec un liant thermofusible ou huileux, ce mélange étant appliqué en utilisant la technique de sérigraphie. Après application, l'ensemble est cuit jusqu'à la température de fusion de l'émail, à laquelle le liant s'évapore et les particules fondent en fusionnant ensemble en recouvrant le support d'une couche continue et lisse. Par emploi de couches successives selon la technique de la quadrichromie, on obtient sur les bouteilles des motifs décoratifs colorés, lisses et continus, ce qui représente une limitation stricte du domaine d'application de cette technique.

Le document FR-A-2 229 659 décrit un procédé de revêtement d'un object en verre par pulvérisation électrostatique de particules d'émail formant après cuisson des gouttelettes séparées.

Par rapport à cet état de la technique antérieure, la présente invention vise une nouvelle bouteille comportant un décor indélébile dont les éléments, sous forme de fines particules d'émail, ont fusionné non pas ensemble, mais chacune individuellement avec la zone superficielle du verre constituant le flacon, et font donc partie intégrante de la surface extérieure de la bouteille. Selon un mode de réalisation préférentiel de l'invention, lesdites particules ont des dimensions et un aspect tels que l'ensemble du décor ainsi réalisé crée l'impression visuelle et tactile particulaire discontinue d'une patine et/ou d'une couche de poussière sur la surface de la bouteille.

L'invention vise un procédé tel que défini dans la revendication 1. En particulier elle vise un procédé consistant, selon sa réalisation préférentielle, à réaliser un tel dépôt à partir d'une fritte de particules d'émaux, très fines, de l'ordre de 5 à 200 microns, ayant un point de fusion légèrement inférieur au point de fusion du verre de la bouteille, à savoir de l'ordre de 620 à 645° C, et un coefficient de dilatation très proche de celui du verre de la bouteille, à savoir environ 82.10⁻⁷, alors que celui du verre sodo-calcique est de 85.10⁻⁷, à projeter lesdites particules sur la surface extérieure de la bouteille, et à procéder à la cuisson de ces particules en place par un traitement thermique assurant la fusion des particules d'émail avec le verre de la bouteille.

On mélange cette fritte avec une solution oléo-aqueuse, en vue de constituer une suspension ou barbotine très visqueuse, on projette sous pression au moyen d'un pistolet cette barbotine sur la surface extérieure de la bouteille, et on procède à la cuisson de l'ensemble de manière à provoquer la fusion individuelle desdites particules, sans provoquer pour autant le ramollissement du verre de la bouteille, et à éliminer en même temps ladite solution.

Une telle barbotine peut contenir de préférence une proportion de 52 à 59% en poids de particules d'émail présentant une granulométrie répartie entre 5 et 200 microns, dans un liant renfermant 15 à 18% d'un agent huileux et 24 à 28% d'eau, ainsi qu'éventuellement un colorant.

Bien entendu, les modalités de mise en oeuvre de ce procédé de base pourront varier en fonction de l'aspect définitif du décor à obtenir, c'est à dire du «rendu» de la patine ou de la couche de poussière ainsi créées artificiellement.

En particulier, la granulométrie des particules d'émail étant fixée, et de préférence comprise entre 5 et 200 microns, il est possible, selon l'invention, d'obtenir avec un même pistolet, toute une gamme d'aspects du revêtement, en fonction de la densité superficielle desdites particules sur la surface extérieure de la bouteille, ou, mieux, du poids de ces particules déposées sur la bouteille. A une extrémité de cette gamme, on peut créer un revêtement dont l'aspect est assez semblable à une patine naturelle, pratiquement non transparente, les particules étant pratiquement jointives l'une près de l'autre, ce qui donne à ce revêtement un toucher rêche. Le poids de particules ainsi déposées sur une bouteille est alors de l'ordre de 0,8 g. A l'autre extrémité, on peut créer un revêtement dont l'aspect est celui d'une couche de poussière dont les grains sont espacés visiblement d'une distance de l'ordre d'une fraction de millimètre, et qui est donc suffisamment transparente pour laisser apparaître le contenu de la bouteille. Dans ce cas, le poids des particules est de l'ordre de 0,15 g. Entre ces deux extrêmes, il est possible de créer une infinité d'aspects intermédiaires, en partant du principe que, quelle que soit la proportion de particules d'émail par rapport au liant dans la composition projetée, la concentration ou densité superficielle desdites particules individuelles sur la surface extérieure de la bouteille est inversement proportionnelle à la distance de la bouteille audit pistolet et/ou à l'ouverture du faisceau de la composition projetée par le pistolet vers la bouteille, ainsi, subsidiairement qu'à l'inclinaison de l'axe de projection par rapport à l'axe de la bouteille en rotation.

Par ailleurs, les modalités de projection peuvent être modulées, mais en demeurant entre certaines limites.

Ainsi, dans le cas de la projection au pistolet à air comprimé d'une barbotine constituée par une suspension de la fritte dans un liant visqueux, les conditions de la projection par un pistolet du type HVLP, commercialisé par la société BINKS, peuvent varier entre les limites suivantes :
- pression de cuve (alimentation en barbotine) : 0,5 à 2 bars ;
- pression de l'air comprimé : 2,5 à 6 bars ;
- diamètre de la buse de projection : 0,8 à 1,2 mm ;
- distance de projection : 170 à 200 mm ;
- axe d'inclinaison du pistolet par rapport à l'axe de la bouteille : 45 à 90°.

Ce sont en particulier ces facteurs variables qui sont illustrés dans les exemples suivants, qui décrivent divers modes de réalisations du procédé selon l'invention, ces exemples étant donnés à titre illustratif et ne représentant en aucune manière une limitation du domaine protégé par la présente invention.

### Exemple 1 :

Cet exemple illustre l'obtention d'une bouteille présentant la particularité d'être revêtue d'une couche sensiblement uniforme de particules suggérant fortement un aspect poussiéreux connu sous le nom de «effet poussière» ou «poussière fût».

Ce mode de réalisation du procédé consiste à partir d'une suspension de 52,77% en poids d'une fritte de particules d'émail commercialisée sous la dénomination «VN 9308» par la société CERDEC, Limoges, France, dans une suspension contenant, en poids, 16,72% d'un milieu huileux, commercialisé sous la dénomination Medium référence 60685 par la société CERDEC, et 27,57% d'eau, le complément étant un colorant ocre. Ces particules ont une granulométrie de 5 microns en moyenne.

Cette suspension est rendue homogène par rotation dans un fût à température ambiante pendant deux à trois heures, ce qui conduit à une barbotine présentant une viscosité de 4,5 à 5 minutes, évaluée par la méthode de la Coupe Ford.

Cette suspension est alors projetée sous pression par un pistolet présentant les caractéristiques suivantes :
- pistolet HVLP, commercialisé par la société BINKS ;
- pression de cuve du pistolet : 1,5 bars ;
- pression d'alimentation en air comprimé : 4 bars ;
- diamètre d'ouverture de la buse : 0,8 mm ;
- distance de projection : 200 mm à 120-160 mm depuis le fond de la bouteille ;
- axe du pistolet à 90° par rapport à celui de la bouteille,
sur une bouteille animée d'un mouvement de rotation autour d'un axe horizontal jusqu'à ce que toute la surface extérieure de la bouteille soit revêtue de ladite suspension.

On procède alors à une cuisson de ce revêtement, en respectant le cycle suivant : la température est portée en environ 10 minutes à environ 620-645° C, cette température étant la température de fusion des particules d'émail, alors que la température de ramollissement du verre est d'environ 650° C. Dans ces conditions, les particules d'émail adhèrent chacune sur place à la surface extérieure du verre sans que cette dernière soit affectée, et sans perdre leur individualité.

Ce traitement thermique est poursuivi pendant environ 10 minutes, puis la température est ramenée progressivement à la température ambiante.

On obtient, après ce refroidissement, une bouteille présentant un aspect visuel et tactile tout à fait comparable à celui d'une bouteille ayant été revêtue de poussière pendant plusieurs années.

Le poids d'émail déposé (après élimination thermique du liant) est de 0,3 g par bouteille.

### Exemple 2 :

On répète l'exemple 1, en modifiant les conditions de projection de la manière suivante :
- pression de cuve : 2,2 bars ;
- pression de pulvérisation : 4,5 bars ;
- diamètre d'ouverture de la buse : 0,8 mm ;
- distance de projection : 200 mm à 50 mm du fond de la bouteille ;
- axe de projection : perpendiculaire à l'axe de la bouteille.

On obtient un dépôt de 0,15 g seulement, mais localisé sur la zone de projection au lieu d'être uniforme.

### Exemple 3 :

On répète l'exemple 1, mais en modifiant les conditions de projection de la manière suivante :
- pression de cuve : 2,2 bars ;
- pression de pulvérisation : 4,5 bars ;
- diamètre d'ouverture de la buse : 0,8 mm ;
- distance de projection : 160 mm depuis l'avant du goulot vers l'épaule de la bouteille ;
- axe de projection : 45° par rapport à l'axe de la bouteille.

On obtient un dépôt de 0,15 g localisé sur le goulot et surtout l'épaulement de la bouteille, connu sous le nom de «poussière d'épaule».

### Exemple 4 :

On répète l'exemple 3, avec les modifications suivantes :
- pression de cuve : 1,3 bars ;
- pression de pulvérisation : 4 bars ;

On obtient un effet de poussière d'épaule plus marqué, du fait que le poids du dépôt est porté à 0,4g.

### Exemple 5 :

On répète l'exemple 3, avec les modifications suivantes :
- pression de cuve : 1 bar;
- pression de pulvérisation : 5 bars ;

L'effet d'épaule est réduit, le poids déposé étant ramené à 0,18 g.

Il ressort clairement de ces exemples que, selon l'invention, les modalités d'application de ce mode de réalisation du procédé peuvent être modulées assez largement en fonction des effets que l'on souhaite produire sur les bouteilles.

Toutefois, il est pratiquement impératif, selon la réalisation préférentielle de l'invention, de respecter certaines limites inférieures et supérieures respectivement pour certains de ces facteurs, les résultats obtenus en se plaçant à l'extérieur des intervalles ainsi définis n'étant généralement pas suffisamment satisfaisants.

Ainsi, pour ce qui concerne :
- la granulométrie des grains d'émail, elle doit être comprise entre 5 et 200 microns ; au-dessous de 5 microns, les particules ne peuvent conserver leur individualité, et au-dessus de 200 microns, la barbotine n'est plus manipulable convenablement, et surtout aucune poussière n'est formée de si grosses particules, et un tel décor ne serait pas crédible.
- la température de fusion des particules d'émail doit être comprise entre 620 et 645° C, pour demeurer au-dessous de la température de ramollissement du verre de la bouteille ;
- leur coefficient de dilatation doit être de 82.10⁻⁷, aussi proche que possible du verre de la bouteille, pour éviter les tensions.

Sous réserve des limitations préférentielles ci-dessus, qui rentrent donc dans le cadre de la présente invention, il sera facile aux spécialistes d'apporter aux modes opératoires énumérés ci-dessus, à titre d'exemples illustratifs, de nombreuses variantes, selon les cas particuliers et les objectifs à atteindre sur le plan artistique et décoratif.

Ainsi, comme l'illustre l'exemple 3, en vue d'accroître encore le réalisme de l'aspect «poussiéreux» des bouteilles, on peut procéder à un dépôt non uniforme, c'est à dire n'intéressant pas au même degré toute la surface de la bouteille, mais étant par exemple plus intense dans la zone d'une bouteille supposée avoir été plus exposée que les autres à la poussière.

Le dépôt de l'imitation de poussière peut intervenir également après que la bouteille ait reçu ses décorations usuelles (par exemple une étiquette, un blason, un cachet, etc.).

On notera que, pour se conformer à certaines régulations liées à la protection de la santé publique, l'émail utilisé en particules est de préférence exempt de plomb.

L'invention n'est donc pas limitée aux exemples ainsi cités ci-dessus, mais est définie par les revendications ci-après.

## Revendications

1. Procédé pour la réalisation sur la surface extérieure d'un volume en verre, tel qu'une bouteille ou un flacon, d'un décor indélébile constitué par de fines particules d'émail fusionnées chacune sur place avec la couche superficielle du verre dudit volume, du type dans lequel on projette sur ladite surface extérieure une fritte de particules d'émaux ayant un point de fusion légèrement inférieur au point de ramollissement dudit verre et un coefficient de dilatation très proche de celui dudit verre, dans des conditions telles que ladite fritte demeure temporairement en place sur ladite surface, et on procède, pendant que ladite fritte est ainsi en place sur ladite surface, à la cuisson de cette fritte par un traitement thermique à une température telle que lesdites particules de fritte fondent sur ladite surface en fusionnant avec elle, mais en conservant leur individualité sans s'associer entre elles pour former un film continu,
caractérisé en ce que, en vue de créer sur ledit volume à décorer, par le nombre, la disposition, la répartition et/ou la couleur desdites particules d'émail, l'impression visuelle et tactile discontinue particulaire d'une patine ou d'une couche de poussière ancienne, ladite fritte est utilisée à l'état de suspension dans un liant oléo-aqueux de manière à constituer une barbotine suffisamment visqueuse ladite barbotine est projetée sur ladite surface au moyen d'un pistolet pneumatique actionné par l'air comprimé, et ledit traitement thermique provoque à la fois la fusion des particules d'émail constituant la fritte, leur fusionnement individuel avec la surface du verre et l'élimination dudit liant.

2. Procédé selon la revendication 1, dans lequel la viscosité de ladite barbotine est de l'ordre de 4,5 à 5 mm, évaluée par la méthode de la coupe Ford.

3. Procédé selon la revendication 1, dans lequel les particules d'émail constituant la fritte ont une taille comprise entre 5 et 200 microns.

4. Procédé selon la revendication 1, dans lequel les particules d'émail constituant la fritte ont un point de fusion compris entre 620°C et 645°C.

5. Procédé selon la revendication 1, dans lequel les particules d'émail constituant la fritte ont un coefficient de dilatation d'environ 82.10⁻⁷.

6. Procédé selon la revendication 1, dans lequel l'émail utilisé pour former les particules constituant la fritte est pratiquement exempt de plomb.

7. Procédé selon l'une quelconque des revendications 1 à 6, caractérisé en ce que le poids de particules d'émail déposées sur la surface d'une bouteille en verre est comprise entre 0,15 et 0,80 g.

8. Procédé selon l'une quelconque des revendications 1 à 7, caractérisé en ce que les modalités de fonctionnement du pistolet pneumatique utilisé pour projeter la barbotine sur la surface du volume en verre sont les suivantes :
- pistolet HVLP, commercialisé par la société BINKS ;
- pression de cuve du pistolet : 0,5 à 2 bars ;
- pression d'alimentation en air comprimé : 2,5 à 6 bars ;
- diamètre d'ouverture de la buse de projection : 0,8 à 1,2 mm ;
- distance de projection : 170 à 200 mm.

9. Procédé selon la revendication 8, dans lequel l'axe dudit pistolet est perpendiculaire à l'axe de la bouteille

10. Procédé selon la revendication 8, dans lequel l'axe dudit pistolet est incliné par rapport à l'axe de la bouteille d'un angle de 45°.

11. Procédé selon l'une quelconque des revendications précédentes, caractérisé en ce que le traitement thermique du volume revêtu de la couche de barbotine consiste en un chauffage à une température de 620-645°C pendant une durée d'environ 10 minutes.

## Patentansprüche

1. Verfahren zum Herstellen eines nicht entfernbaren Dekors auf einer äußeren Oberfläche eines Glasvolumens wie etwa einer Flasche oder eines Fläschchens, wobei das Dekor aus feinen Emailleteilchen gebildet ist, die jeweils an ihrem Ort mit der Oberflächenschicht des Glases des Volumens verschmolzen sind, des Typs, bei dem auf die äußere Oberfläche ein Gemenge aus Emailleteilchen geschleudert wird, die einen Schmelzpunkt, der etwas unterhalb des Erweichungspunkts des Glases liegt, und einen Ausdehnungskoeffizienten besitzen, der sehr nahe bei demjenigen des Glases liegt, unter Bedingungen, daß das Gemenge vorübergehend auf der Oberfläche verbleibt, wobei dieses Gemenge, während es somit auf der Oberfläche angeordnet ist, durch eine Wärmebehandlung bei einer Temperatur gebrannt wird, bei der sich die Gemengeteilchen auf der Oberfläche absetzen, indem sie mit ihr verschmelzen, jedoch ihre Individualität beibehalten, ohne sich miteinander zu verbinden, um einen ununterbrochenen Film zu bilden,
dadurch gekennzeichnet, daß für die Erzeugung des besonderen, diskontinuierlichen visuellen und taktilen Eindrucks einer Patina oder einer alten Staubschicht auf dem zu verzierenden Volumen durch die Anzahl, die Anordnung, die Verteilung und/oder die Farbe der Emailleteilchen das Gemenge im Zustand der Suspension in einem öligwäßrigen Bindemittel verwendet wird, um einen ausreichend viskosen Schlicker zu bilden, wobei der Schlicker auf die Oberfläche mittels einer Druckluftpistole geschleudert wird, die durch Druckluft betätigt wird, wobei die Wärmebehandlung zugleich das Schmelzen der das Gemenge bildenden Emailleteilchen, ihr jeweiliges Verschmelzen mit der Glasoberfläche und die Beseitigung des Bindemittels hervorruft.

2. Verfahren nach Anspruch 1, bei dem die Viskosität des Schlickers in der Größenordnung von 4,5 bis 5 mm, bewertet mit dem Ford-Schnittverfahren, liegt.

3. Verfahren nach Anspruch 1, bei dem die das Gemenge bildenden Emailleteilchen eine Größe im Bereich von 5 bis 200 um besitzen.

4. Verfahren nach Anspruch 1, bei dem die das Gemenge bildenden Emailleteilchen einen Schmelzpunkt im Bereich von 620 °C bis 645 °C besitzen.

5. Verfahren nach Anspruch 1, bei dem die das Gemenge bildenden Emailleteilchen einen Ausdehnungskoeffizienten von ungefähr 82 · 10⁻⁷ besitzen.

6. Verfahren nach Anspruch 1, bei dem das für die Bildung der das Gemenge bildenden Teilchen verwendete Emaille im wesentlichen bleifrei ist.

7. Verfahren nach einem der Ansprüche 1 bis 6, dadurch gekennzeichnet, daß das Gewicht der Emailleteilchen, die auf der Oberfläche einer Glasflasche abgelagert sind, im Bereich von 0,15 bis 0,80 g liegt.

8. Verfahren nach einem der Ansprüche 1 bis 7, dadurch gekennzeichnet, daß die Betriebsarten der Druckluftpistole, die zum Aufschleudern des Schlickers auf die Oberfläche des Glasvolumens verwendet wird, die folgenden sind:
- HVLP-Pistole, vertrieben von der Firma BINKS;
- Behälterdruck der Pistole: 0,5 bis 2 Bar;
- Versorgungsdruck der Druckluft: 2,5 bis 6 Bar;
- Öffnungsdurchmesser der Aufschleuderdüse: 0,8 bis 1,2 mm;
- Aufschleuderabstand: 170 bis 200 mm.

9. Verfahren nach Anspruch 8, bei dem die Achse der Pistole zur Achse der Flasche senkrecht ist.

10. Verfahren nach Anspruch 8, bei dem die Achse der Pistole in bezug auf die Achse der Flasche in einem Winkel von 45° geneigt ist.

11. Verfahren nach einem der vorangehenden Ansprüche, dadurch gekennzeichnet, daß die Wärmebehandlung des mit der Schlickerschicht überzogenen Volumens aus einer Erwärmung auf eine Temperatur von 620-645 °C während einer Dauer von ungefähr zehn Minuten besteht.

## Claims

1. Process for the production on the outer surface of a glass volume, such as a bottle or flask, of an indelible decoration consisting of fine particles of enamel each fused in place with the surface layer of the glass of the said volume, of the type wherein there is sprayed onto the said outer surface a frit of enamel particles having a melting point slightly lower than the softening point of the said glass and a coefficient of expansion very close to that of the said glass, under conditions such that the said frit remains temporarily in place on the said surface and, while the said frit is thus in place on the said surface, this frit is fired by a heat treatment at a temperature such that the said particles of frit melt on the said surface while fusing with it, but while retaining their individuality without associating together to form a continuous film,
characterized in that, with a view to creating on the said volume to be decorated, the particulate,
discontinuous, visual and tactile impression of a patina or of an ancient layer of dust, by means of the number, arrangement, distribution and/or colour of the said enamel particles, the said frit is used in the suspended state in an oleo-aqueous binder so as to constitute a sufficiently viscous slip, the said slip is sprayed onto the said surface by means of a pneumatic gun actuated by compressed air, and the said heat treatment simultaneously brings about fusion of the enamel particles constituting the frit, their individual fusion with the surface of the glass and the elimination of the said binder.

2. Process according to claim 1, wherein the viscosity of the said slip is of the order of 4.5 to 5 min, evaluated by the Ford cup method.

3. Process according to claim 1, wherein the enamel particles constituting the frit have a size comprised between 5 and 200 microns.

4. Process according to claim 1, wherein the enamel particles constituting the frit have a melting point comprised between 620°C and 645°C.

5. Process according to claim 1, wherein the enamel particles constituting the frit have a coefficient of expansion of approximately 82 × 10⁻⁷.

6. Process according to claim 1, wherein the enamel used to form the particles constituting the frit is practically free from lead.

7. Process according to any one of claims 1 to 6, characterized in that the weight of the enamel particles deposited on the surface of a glass bottle is comprised between 0.15 and 0.80 g.

8. Process according to any one of claims 1 to 7, characterized in that the operating methods for the pneumatic gun used to spray the slip onto the surface of the glass volume are as follows:
- HVLP gun, marketed by the BINKS company;
- pressure in the chamber of the gun: 0.5 to 2 bar;
- compressed air supply pressure: 2.5 to 6 bar;
- diameter of the opening of the spray nozzle: 0.8 to 1.2 mm;
- spraying distance: 170 to 200 mm.

9. Process according to claim 8, wherein the axis of the said gun is perpendicular to the axis of the bottle.

10. Process according to claim 8, wherein the axis of the said gun is inclined with respect to the axis of the bottle by an angle of 45°.

11. Process according to any one of the preceding claims, characterized in that the heat treatment of the volume coated with the layer of slip consists of heating at a temperature of 620-645°C for a period of approximately 10 minutes.
